# EUROPÄISCHE PATENTSCHRIFT

(11) **EP 1 839 234 B1**
(45) Veröffentlichungstag und Bekanntmachung des Hinweises auf die Patenterteilung: **12.01.2011**
(21) Anmeldenummer: 05801444.0
(22) Anmeldetag: 07.10.2005
(51) Int. Cl.: G06K 17/00, G06K 19/07, G08C 17/02

(54) **TRANSPORTÜBERWACHUNGSSYSTEM**
TRANSPORT MONITORING SYSTEM
SYSTEME DE SURVEILLANCE DE TRANSPORT

(30) Priorität: 07.01.2005 DE 102005001034
(43) Veröffentlichungstag der Anmeldung: 03.10.2007
(73) Patentinhaber: Deutsche Telekom AG, 53113 Bonn (DE)
(72) Erfinder: SCHMID, Rolf, Hermann, 89075 Ulm (DE); FEUCHTMÜLLER, Hartmut, 89129 Langenau (DE); EPPLE, Matthias, 89081 Ulm (DE); RAMPF, Alfred, 89134 Blaustein (DE); NEUERBURG, Hans-Jürgen, 53757 Sankt Augustin (DE)
(86) Internationale Anmeldenummer: PCT/DE2005/001791
(87) Internationale Veröffentlichungsnummer: WO 2006/072225

(56) Entgegenhaltungen:
- WO-A-03/023439
- CA-A1- 2 411 395
- US-A1- 2004 069 850

## Beschreibung

Die Erfindung betrifft ein Transportüberwachungssystem zum abhörsicheren Transport von Waren.

Die Überwachung von Warenströmen gewinnt zunehmend an Bedeutung, da einerseits die Menge der transportierten Waren weltweit ständig zunimmt und anderseits auf die zeitgenaue Anlieferung von Waren, insbesondere von Industriegütern am Zielort für die Weiterverarbeitung gemäß sogenannten "Just-in-timeKonzepte" nicht verzichtet werden kann. Aufgrund der zunehmenden Komplexität und des zunehmenden Umfanges der Warenströme wird deren logistische Überwachung immer wichtiger.

Die US 2004/0069,850 A1 beschreibt eine Transportvorrichtung mit einer verschließbaren Transporteinheit, wobei durch einen Türsensor das Schließen der Transporteinheit sensorisch erfasst wird. Die in der Transportvorrichtung transportierten Waren weisen RFID Tags auf, die mittels eines Transceivers ausgelesen werden. Bei jedem Schließen der Tür wird der Warenbestand innerhalb der Transportvorrichtung ausgewertet.

Die CA 2411 395 A1 beschreibt ein System zur automatischen Durchsetzung der Befolgung von Regulationen für ein Fahrzeug. Dabei wird ein Betriebsparameter des Fahrzeugs durch einen Sensor, insbesondere einen Geschwindigkeitssensor, erfasst und ein Alarm hervorgerufen wenn der Betriebsparameter einen bestimmten Schwellenwert überschreitet.

Die WO 03/023439 A2 beschreibt einen Schifffahrtscontainer mit einer integrierten Lokalisierungseinheit.

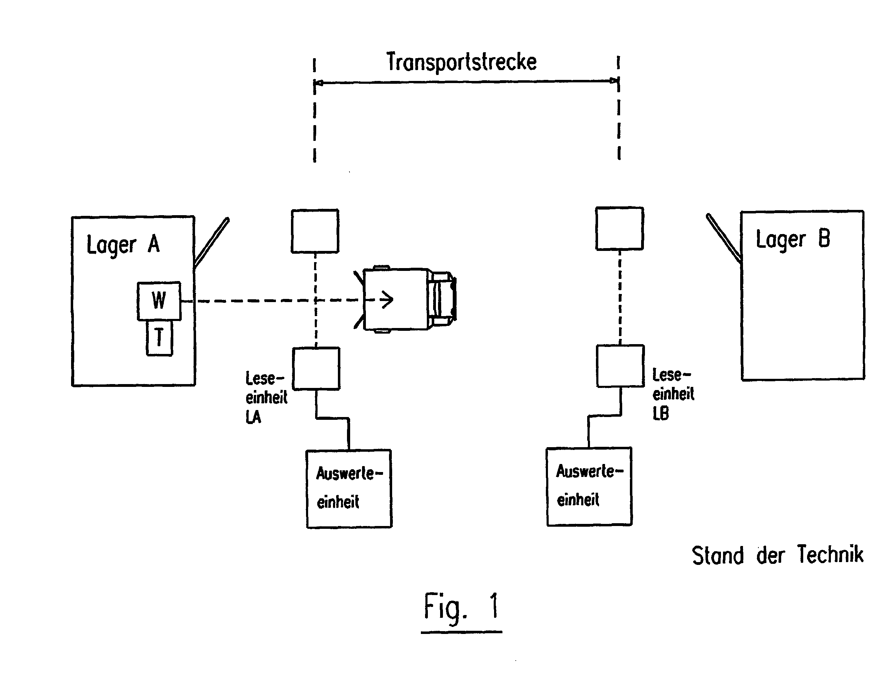

Die zweite Figur 1 zeigt ein Transportüberwachungssystem am Stand der Technik.

Figur 1 zeigt ein Transportüberwachungssystem nach dem Stand der Technik. Darin werden aus einem Lager A Waren in ein Lager B transportiert. Zur Transportüberwachung werden die Waren W mit sogenannten Tags T versehen. Tags sind Identifizierungsbauelemente, die aus einem Träger, beispielsweise aus einem Warenetikett und aus einem kleindimensionierten Transponderchip bestehen. Bekannt sind sogenannte RFID (Radiofrequenzidentifikations) - Transponderchips, wobei man passive, semi-aktive und aktive Tags unterscheidet. Die Tags dienen zur Identifizierung der mit ihnen versehenen Waren. Eine Leseeinheit bzw. Reader weist eine Empfangseinheit zum Senden und Empfangen elektromagnetischer Wellen auf. Die abgestrahlten Wellen werden durch eine in den Tags vorgesehene Spule aufgenommen. Tags erhalten von der Sende- und Empfangseinrichtung des Readers einen Signalimpuls zum Zurücksenden eines individuellen Antwortsignals an den Reader.

Passive Tags weisen keine eigene Stromversorgung auf, sondern nehmen die von dem Reader abgestrahlte Leistung des Sendeimpulses auf, wobei sie die aufgenommene Leistung zur Generierung des Antwortsignals einsetzen. Passive Tags weisen naturgemäß eine relativ geringe Reichweite auf.

Semiaktive Tags weisen eine eigene Stromversorgung auf, wobei ein Teil der für die Rückantwort notwendigen Leistung durch die eigene Stromversorgung geliefert wird und ein weiterer Anteil aus der Leistung des vom Reader empfangenen Signals gewonnen wird. Die Reichweite von semiaktiven Tags ist etwas höher als die von passiven Tags.

Aktive Tags weisen ebenfalls eine eigene Stromversorgung auf, wobei die Leistung für das Antwortsignal für die Identifizierung der Waren vollständig aus der eigenen Stromversorgung gewonnen wird.

Während aktive Tags mit einer relativ geringen Sendeleistung durch den Reader angestrahlt werden, werden passive Tags mit einer relativ hohen Signalleistung angestrahlt, da sie die Energie zur Generierung des Antwortsignals daraus gewinnen müssen. Passive Tags haben den Vorteil, dass sie keine eigene Stromversorgung benötigen, müssen jedoch mit einer relativ hohen Leistung angestrahlt werden. Umgekehrt haben aktive Tags den Vorteil, dass sie nur mit einer relativ geringen Sendeleistung angestrahlt werden müssen, allerdings besteht die Gefahr, dass die Stromversorgung der aktiven Tags nach einer gewissen Zeit aussetzt.

Bei dem in Figur 1 dargestellten herkömmlichen Transportüberwachungssystem werden die zu transportierenden Waren W durch eine Leseeinheit LA aus dem Lager A in eine Transportvorrichtung, beispielsweise in einen LKW eingeladen. Die Leseeinheit LA erfasst die in den LKW eingeladen Waren mittels der an den Waren W angebrachten Tags T. An der Leseeinheit LA ist eine Auswerteeinheit angeschlossen, die beispielsweise die Lagerinventarliste des Lagers A aktualisiert. Die Transportvorrichtung bzw. der LKW bringt die mit Tags T versehenen Waren zu einem Ziellager B. Die Waren werden aus dem LKW ausgeladen, durch eine Leseeinheit B geführt und in dem Ziellager B eingelagert. Die Leseeinheit B erfasst die in das Lager B gebrachten Waren W mittels der an den Waren W angebrachten Tags T. Eine Auswerteeinheit, die an der Leseeinheit LB angeschlossen ist, aktualisiert den Lagerbestand des Lagers B.

Das in Figur 1 dargestellte Transportüberwachungssystem weist einige Nachteile auf. Es besteht die Gefahr, dass Waren zwar durch die Leseeinheit LA geführt werden, jedoch nicht tatsächlich in den LKW bzw. in die Transportvorrichtung gelangen. Waren können gewollt oder ungewollt die Leseeinheit LA passieren, ohne dass sie in den LKW eingeladen werden. Beispielsweise werden Waren W irrtümlich in einen falschen LKW, der zu einem anderen Lager fährt, eingeladen. Darüber hinaus besteht keinerlei Kontrolle über die Waren während sie sich in der Transportvorrichtung auf der Transportstrecke zwischen den beiden Lagern A, B befinden.

Es wurde daher in der DE 19 844 631 A1 ein System zur Überwachungssteuerung, Verfolgung und zum Handling von Objekten vorgeschlagen, wie es in Figur 2 dargestellt ist. Die in der DE 19 844 631 A1 beschriebene Transportvorrichtung, beispielsweise ein LKW, enthält ein Schreib-/Lesegerät zum Auslesen von Tags T, die an Waren W innerhalb der Transportvorrichtung angebracht sind. Die Leseeinheit bzw. der Reader sendet Abfragesignale, ä. h. elektromagnetische Signale, in den Transportraum des LKWs aus und empfängt Identifizierungsdatensignale von den in den Transportraum befindlichen Transpondern. Eine an die Leseeinheit bzw. an dem Reader angebrachte Auswerteeinheit wertet die empfangenen Identifizierungsdatensignale aus. Hierdurch wird beispielsweise überwacht, ob sich noch alle eingeladenen Waren in dem Transportraum befinden. Die an den Waren angebrachten mobilen Datenträger bzw. Tags senden an die Leseeinheit Identifikationsdaten sowie objektspezifische Daten. Darüber hinaus senden die an den Waren angebrachten Tags weitere Daten, beispielsweise Daten, welche die Temperatur in dem Transportbehälter angeben. Überschreitet oder unterschreitet beispielsweise die gemessene Temperatur einen Schwellenwert, löst dies eine Warnmeidung für den Fahrer des LKW aus, der die notwendigen Gegenmaßnahmen einleitet. Wenngleich das in der DE 19 844 631 A1 beschriebene Transportüberwachungssystem einen Fortschritt gegenüber dem in Figur 1 dargestellten Transportüberwachungssystem darstellt, so weist es dennoch weiterhin erhebliche Nachteile auf

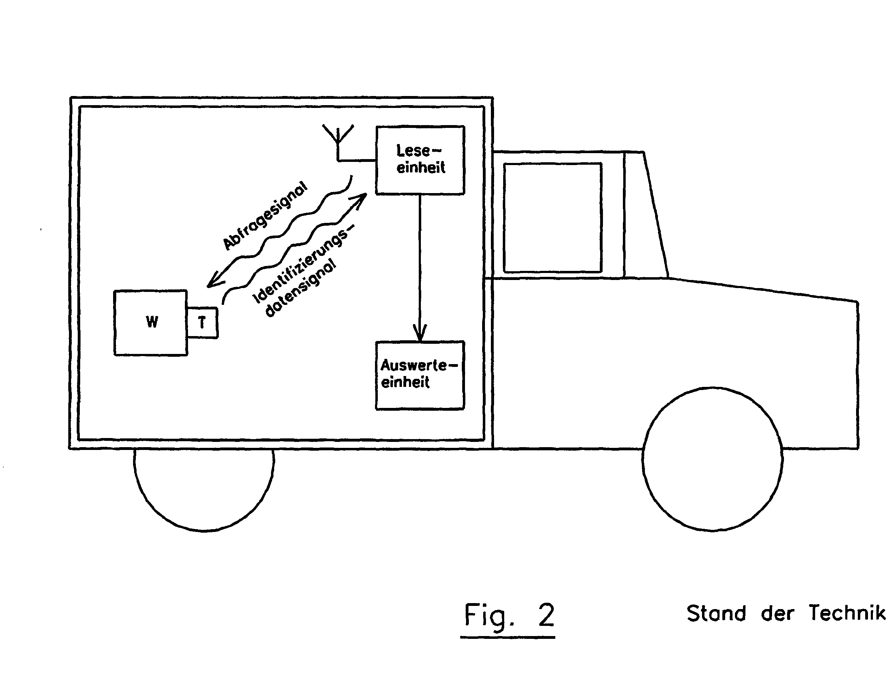

Werden Waren aus dem in Figur 2 dargestellten LKW entfernt, beispielsweise durch Diebstahl, gelangen die Waren mit den an ihnen angebrachten Tags außerhalb der Sendereichweite des Readers bzw. der Leseeinheit. Um einen derartigen Warenschwund festzustellen, muss daher die Leseeinheit permanent bzw. in regelmäßigen Zeitabständen (beispielsweise alle 5 Minuten) ein Abfragesignal in den Transportraum des LKWs abstrahlen. Besteht der Verdacht, dass Waren aus dem Transportraum entwendet worden sind, kann das Schreib-/Lesegerät ferner durch den Fahrer aktiviert werden, um die Tags auszulesen. Ein Nachteil des in der DE 19 844 631 A1 beschriebenen Transportüberwachungssystem besteht darin, dass bei einem periodisch bzw. permanent ausgesendeten Abfragesignal die Verwendung aktiver Tags zur Überwachung der Waren unsicher ist. Durch das periodische Aussenden des Abfragesignals wird die Stromversorgung bzw. die Batterie der aktiven Tags regelmäßig in Anspruch genommen, so dass die Batterie der aktiven Tags sich im Laufe der Zeit entleert. Nachdem die Batterie der Tags leer ist, können diese kein Identifizierungsdatensignal an den Reader zurücksenden, wobei dies zu ungewollten Fehlmeldungen führt. Werden die Zeitabstände zwischen den Abfragesignalen erhöht, beispielsweise auf eine Zeitperiode von 10 Minuten, besteht die Gefahr, dass in der Zwischenzeit Waren aus der Transportvorrichtung entwendet werden. Eine Erhöhung der Zeitperiode beim Aussenden des Abfragesignals verlängert zwar die Haltbarkeit der aktiven Tags, allerdings wird der Verlust bzw. die Entwendung von Waren meist erst später entdeckt.

Ein weiterer Nachteil des in Figur 2 dargestellten herkömmlichen Transportüberwachungssystem besteht darin, dass das System nicht abhörsicher ist. Werden von Schreib/Leseeinheiten Abfragesignale in die Transportvorrichtung ausgesendet, antworten die an den Waren angebrachten Tags indem sie Identifizierungsdatensignale an die Leseeinheit zurücksenden. Da die Identifizierungsdatensignale auch außerhalb der Transportvorrichtung abstrahlen, beispielsweise an ein hinter dem LKW fahrendes Fahrzeug, ist es für Dritte möglich, ohne weiteres anhand der ausgestrahlten Identifizierungsdatensignale festzustellen, welche Waren in dem LKW transportiert werden.

Dritte können somit feststellen, ob sich ein Diebstahl der Waren lohnt. So kann aufgrund der fehlenden Abhörsicherheit nicht gewährleistet werden, dass der heimliche Transport bestimmter Waren, beispielsweise im militärischen Bereich, durch Dritte bemerkt wird.

Ein weiterer Nachteil der in Figur 2 dargestellten Transportvorrichtung nach dem Stand der Technik besteht darin, dass das von der Schreib-/Leseeinheit ausgesendete Abfragesignal und die von den Tags zurückgesendeten Identifizierungsdatensignale zu Problemen bei der elektromagnetischen Verträglichkeit führen. Abfragesignale und die zurückgesendeten Identifizierungsdatensignale können weitere elektronische Systeme in der Transportvorrichtung stören. Handelt es sich beispielsweise bei der Transportvorrichtung um eine Flugzeug können das periodisch gesendete Abfragesignal und die zurückgesendeten Identifizierungsdatensignale die dort vorhandene empfindliche Elektronik stören und ein Sicherheitsrisiko darstellen.

Ein weiterer Nachteil der in Figur 2 dargestellten Transportvorrichtung nach dem Stand der Technik besteht darin, dass es sich um ein lokales Transportüberwachungssystem handelt, bei dem der Fahrer der Transportvorrichtung auf Fehlermeldungen reagiert. Sofern beispielsweise Waren mit Hilfe des Fahrers aus der Transportvorrichtung entwendet werden, kann dies nicht unmittelbar festgestellt werden.

Es ist daher die Aufgabe der vorliegenden Erfindung, ein Transportüberwachungssystem zu schaffen, bei dem der Transport von Waren lückenlos und abhörsicher über die gesamte Transportstrecke überwacht wird.

Diese Aufgabe wird erfindungsgemäß durch ein Transportüberwachungssystem zum abhörsicheren Transport von Waren mit den in Patentanspruch 1 angegebenen Merkmalen gelöst.

Wird bei dem Beladen der Transporteinheit diese durch eine Schließvorrichtung einbruchsicher verschlossen, erzeugt der an der Schließvorrichtung angebrachte Verschlusssensor das Aktivierungssignal zur Aktivierung der Leseeinheit. Diese sendet daraufhin einmalig ein Abfragesignal zum Auslesen der Identifizierungstags in den Transportraum bzw. in die Transporteinheit und empfängt anschließend einmalig bzw. wenige Male die von den Identifizierungstags zurückgesendeten Identifizierungsdatensignale, welche in der Auswerteeinheit ausgewertet werden.

Solange der Verschlusssensor anzeigt, dass die Transporteinheit fest verschlossen ist, strahlt die Leseeinheit kein weiteres Abfragesignal in die Transporteinheit zum Auslesen der Identifizierungstags ab, sofern sie nicht ein anderes Aktivierungssignal erhält. Hierdurch wird gewährleistet, dass unbefugte Dritte keine Identifizierungsdatensignale aus der Transporteinheit empfangen, wenn sich die Transportvorrichtung auf der Transportstrecke befindet. Solange die Schließvorrichtung fest verschlossen ist, ist ein Entwenden der Ware aus der Transporteinheit ausgeschlossen, so dass nicht durch periodisches Senden eines Abfragesignals sichergestellt werden muss, dass sich die Waren noch innerhalb der Transporteinheit befinden. Selbstverständlich kann auf Wunsch durch die Leseeinheit ein Abfragesignal an die Transporteinheit versendet werden, sofern der Fahrer dies aktiv veranlasst bzw. wenn eine Zentraleinheit ein entsprechendes Aktivierungssignal an die Transportvorrichtung sendet. Da die an den Waren angebrachten Tags nur beim Einladen der Waren in die Transporteinheit bzw. beim Ausladen der Waren aus der Transporteinheit ein Abfragesignal empfangen und sonst nur in seltenen Fällen, eignet sich das Transportüberwachungssystem auch für Waren, die mit aktiven Tags versehen sind. Aufgrund der selten empfangenen Abfragesignale ist die Batterie der an den Waren angebrachten Tags viel länger haltbar. Aktive Tags haben den Vorteil einer höheren Reichweite innerhalb des Transportraums. Das Volumen der Transporteinheit, in die die Waren eingeladen werden, kann daher erheblich größer sein als bei der in Figur 2 dargestellten Transportvorrichtung nach dem Stand der Technik.

Bei einer bevorzugten Ausführungsform des erfindungsgemäßen Transportüberwachungssystems weist diese eine Sende-/Empfangsantenne zum Abstrahlen des Abfragesignals in die Transporteinheit und zum Empfangen der Identifizierungsdatensignale von den Identifizierungstags auf

Selbstverständlich können innerhalb der Transporteinheit mehrere Sende-/Empfangsantennen vorgesehen werden, die an die Leseeinheit angeschlossen sind.

Bei einer besonders bevorzugten Ausführungsform des erfindungsgemäßen Transportüberwachungssystems weist die Auswerteeinheit mindestens eine Schnittstelle zur drahtlosen Datenübertragung auf.

Bei einer bevorzugten Ausführungsform wird ein Aktivierungssignal zur Aktivierung der Leseeinheit über diese Schnittstelle an die Auswerteeinheit von einer entfernt gelegenen Zentraleinheit übertragen. Die Zentraleinheit sendet eine Nachricht zur Aktivierung der Leseeinheit während sich die Transportvorrichtung auf der Transportstrecke befindet und empfängt eine Nachricht, welche die Identifizierungsdatensignale der gekennzeichnet Waren umfasst. Die Zentraleinheit kann somit während des Transports die Art und Menge der in der Transportvorrichtung transportierten Waren feststellen.

Bei einer bevorzugten Ausführungsform enthält das erfindungsgemäße Transportüberwachungssystem als zweite Aktivierungseinheit einen Geschwindigkeitssensor zur Erfassung der Fahrgeschwindigkeit der Transportvorrichtung, wobei das Aktivierungssignal zur Aktivierung der Leseeinheit erst erzeugt wird, wenn die Fahrgeschwindigkeit der Transportvorrichtung einen einstellbaren Geschwindigkeitsschwellenwert überschritten hat.

Bei einer weiteren bevorzugten Ausführungsform weist das erfindungsgemäße Transportüberwachungssystem als weitere Aktivierungseinheit einen Beladungssensor zur Erfassung eines Beladungsgewichtes der Transportvorrichtung auf, wobei das Aktivierungssignal erst erzeugt wird, wenn das Beladungsgewicht einen einstellbaren Gewichtsschwellenwert überschritten hat.

Bei der Transporteinheit handelt es sich vorzugsweise um einen Container.

Bei einer Ausführungsform des erfindungsgemäßen Transportüberwachungssystems sind die Identifizierungstags aktive Tags mit einer eigenen Stromversorgung.

Bei einer alternativen Ausführungsform des erfindungsgemäßen Transportüberwachungssystems sind die Identifizierungstags passive Tags ohne eine eigene Stromversorgung. Bei einer besonders bevorzugten Ausführungsform der erfindungsgemäßen Transportvorrichtung sind die an den Waren angebrachten Identifizierungstags jeweils mit RFID-Transpondern versehen.

Diese RFID-Transponder sind vorzugsweise an einem Warenetikett angebracht.

Bei einer bevorzugten Ausführungsform des erfindungsgemäßen Transportüberwachungssystems weist diese Zustandssensoren zur Erfassung des Transportzustandes der Ware auf, wobei die Zustandssensoren an die Auswerteeinheit angeschlossen sind.

Die Zustandssensoren umfassen vorzugsweise Temperatursensoren zum Erfassen der Temperatur innerhalb der Transporteinheit.

Die Zustandssensoren umfassen vorzugsweise Geschwindigkeitssensoren zur Erfassung einer Fahrgeschwindigkeit der Transportvorrichtung.

Die Zustandssensoren umfassen ferner vorzugsweise Beschleunigungssensoren zur Erfassung der Beschleunigung der Transportvorrichtung.

Bei einer bevorzugten Ausführungsform weist das erfindungsgemäße Transportüberwachungssystem eine Transporteinheit auf, insbesondere ein Kraftfahrzeug, beispielsweise ein LKW.

In dem Kraftfahrzeug sind dabei vorzugsweise Zustandssensoren vorgesehen, die zur Erfassung des Transportzustandes der in dem Kraftfahrzeug transportierten Waren an die Auswerteeinheit angeschlossen sind. Bei einer besonders bevorzugten Ausführungsform umfassen die Zustandssensoren Reifendrucksensoren zur Erfassung des Reifendruckes von Reifen des Kraftfahrzeuges.

Die Auswerteeinheit des erfindungsgemäßen Transportüberwachungssystems umfasst vorzugsweise eine Schnittstelle zu der Leseeinheit sowie einen Prozessor zur Datenverarbeitung der von der Leseeinheit empfangenen Identifizierungsdatensignale.

Bei einer besonders bevorzugten Ausführungsform weist die Auswerteeinheit ferner eine Schnittstelle zum Anschluss von Zustandssensoren und eine Schnittstelle zum Anschluss einer Aktivierungseinheit auf.

Bei einer besonders bevorzugten Ausführungsform weist die Auswerteeinheit des erfindungsgemäßen Transportüberwachungssystems ferner eine GSM-Einheit zum Austausch von Nachrichten mit einer Zentraleinheit auf.

Bei einer besonders bevorzugten Ausführungsform des erfindungsgemäßen Transportüberwachungssystems enthält die Auswerteeinheit zusätzlich eine GPS-Einheit zur Erfassung der Position der Transportvorrichtung.

Die Erfindung schafft ferner ein Transportüberwachungssystem zur Überwachung eines aus Waren bestehenden Warenstromes mit einer Vielzahl von Transportvorrichtungen und mit mindestens einer Zentraleinheit, welche Nachrichten mit den Transportvorrichtungen über eine Schnittstelle austauscht.

Weiterhin werden bevorzugte Ausführungsformen des erfindungsgemäßen Transportüberwachungssystems unter Bezugnahme auf die beigefügten Figuren zur Erläuterung erfindungswesentlicher Merkmale beschrieben.

Es zeigen:
Figur 1: Ein Transportüberwachungssystem nach dem Stand der Technik; Figur 2 : Eine Transportvorrichtung zum Transport von Waren nach dem Stand der Technik;
Figur 3: Eine bevorzugte Ausführungsform der Transportvorrichtung des erfindungsgemäßen Transportüberwachungssystems zum Transport von Waren;
Figur 4 : Ein Blockschaltbild einer in der Transportvorrichtung vorgesehenen Telematikeinheit;
Figur 5: Eine Darstellung von in der Transportvorrichtung vorgesehenen Zustandssensoren;
Figur 6: Ein Diagramm zur Erläuterung der Funktionsweise des erfindungsgemäßen Transportüberwachungssystem;
Figur 7a, 7b: Tabellen zur Darstellung eines in dem erfindungsgemäßen Transportüberwachungssystem übertragenen Transportplans;
Figur 8: Die Datenstruktur einer in dem erfindungsgemäßen Transportüberwachungssystem übertragenen Nachricht;
Figur 9: Eine Darstellung der in dem erfindungsgemäßen Transportüberwachungssystem zwischen der Zentrale und einer TeIematikeinheit ausgetauschten Nachrichten.

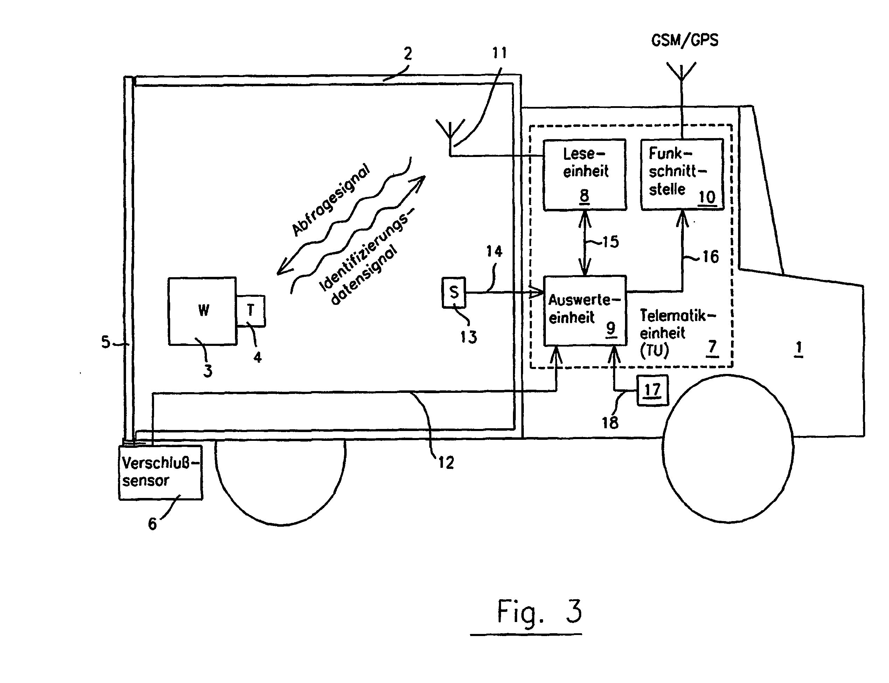

Wie man aus Figur 3 erkennen kann, enthält die Transportvorrichtung 1 zum Transport von Waren in der dargestellten Ausführungsform eine Transporteinheit 2 zur Aufnahme von Waren 3, die jeweils mit Identifizierungstags 4 versehen sind. Bei der in Figur 3 dargestellten Transportvorrichtung 1 handelt es sich um einen Lastkraftwagen. Die Transporteinheit 2 besteht dabei aus dem Laderaum des LKWs. In weiteren Ausführungsformen handelt es sich bei der Transporteinheit 2 um einen Güterwagon eines Zuges oder um einen Kraftfahrzeuganhänger. Die Transporteinheit 2 kann bei alternativen Ausführungsformen auch ein Transportbehälter innerhalb eines Schiffs oder innerhalb eines Flugzeugs sein. Die Transporteinheit 2 vorzugsweise durch eine Tür 5 fest verschließbar. Ein an einer Schließvorrichtung angebrachter Verschlusssensor 6 erfasst, ob die Transporteinheit 2 verschlossen ist. Die Transportvorrichtung 1 enthält eine integrierte Telematikeinheit 7. Die Telematikeinheit 7 ist vorzugsweise auch fest in der Transporteinheit 2 integriert. Die Telematikeinheit 7 weist vorzugsweise ein festes Gehäuse auf, welche die Telematikeinheit 7 vor Manipulationen schützt.

Bei der in Figur 3 dargestellten Ausführungsform enthält die Telematikeinheit 7 eine Leseeinheit 8, eine Auswerteeinheit 9 und eine Funkschnittstelle 10. Bei alternativen Ausführungsformen sind die Leseeinheit 8 und die Funkschnittstelle 10 nicht in die Telematikeinheit 7 integriert. An der Leseeinheit 8 ist mindestens eine Sende/Empfangsantenne 11 angeschlossen, die sich innerhalb der Transporteinheit 2 befindet. Die Sende-/Empfangsantenne 11 eignet sich zum Abstrahlen eines Abfragesignals in die Transporteinheit 2 und zum Empfangen von Identifizierungsdatensignalen, die von Identifizierungstags 4 innerhalb der Transporteinheit 2 ausgesendet werden.

Bei der in Figur 3 dargestellten Ausführungsform ist der Verschlusssensor 6 über eine Leitung 12 an die Auswerteeinheit 9 angeschlossen. Bei einer bevorzugten Ausführungsform ist die Leitung 12 manipulationssicher innerhalb der Transportvorrichtung 1 verlegt. An der Auswerteeinheit 9 ist vorzugsweise ferner ein Zustandssensor 13 über eine Leitung 14 angeschlossen. Der Zustandssensor 13 befindet ebenfalls innerhalb der Transporteinheit 2. Die Zustandssensoren 13 dienen zur Erfassung des Transportzustandes der innerhalb der Transporteinheit 2 transportierten Waren. Zum Transport von Waren wird die Transporteinheit 2 am Beladungsort beladen. Hierzu wird die Transporteinheit 2 mittels der Tür 5 geöffnet, und der Verschlusssensor 6 zeigt der Telematik 7 an, dass die Transporteinheit 2 nunmehr geöffnet ist. Die Waren 3, welche mit Identifizierungstags 4 versehen sind, werden in die Transporteinheit 2 eingeladen, und anschließend wird die Tür 5 verriegelt. Sobald der Verschlusssensor 6 erfasst, dass die Tür 5 fest verriegelt ist, sendet er ein Aktivierungssignal über die Leitung 12 an die Auswerteeinheit 9 oder direkt an die Leseeinheit 8 zu deren Aktivierung aus. Die Leseeinheit 8 ist über Leitungen 15 an die Auswerteeinheit 9 angeschlossen. Die Auswerteeinheit 9 aktiviert nach Erhalt des Aktivierungssignals von dem Verschlusssensor 6 die Leseeinheit 8, so dass diese ein Abfragesignal zum Auslesen der Identifizierungstags 4 in den von der Transporteinheit 2 umschlossenen Transportraum abstrahlt. Die Tags 4, welche das Abfragesignal erhalten, senden Identifizierungsdatensignale zurück an die Sende- und Empfangsantenne 11 der Leseeinheit 8, welche die empfangenen Identifizierungsdatensignale zu deren Auswertung an die Auswerteeinheit 9 über die Leitung 15 abgibt.

Das Abfragesignal zum Auslesen der Tags 4 wird erst ausgesendet nachdem die Transporteinheit 2 fest verschlossen ist, d.h. nachdem sich der Warenbestand innerhalb der Transporteinheit 2 nicht mehr ändert. Zur Feststellung bzw. Überwachung des Warenbestandes innerhalb der Transporteinheit 2 muss daher die Leseeinheit 8 der erfindungsgemäßen Transportvorrichtung 1 nur einmalig ein Abfragesignal abstrahlen. Nach Empfang der Identifizierungsdatensignale und deren Weiterleitung an die Auswerteeinheit 9 wird durch die Leseeinheit 8 kein weiteres Abfragesignal in den Transportraum abgestrahlt, sofern die Leseeinheit 8 kein weiteres Aktivierungssignal erhält. Bei der in Figur 3 dargestellten Ausführungsform ist die Auswerteeinheit 9 über eine Leitung 16 an eine Funkschnittstelle 10 angeschlossen. Die Funkschnittstelle 10 ist eine Schnittstelle zur drahtlosen Datenübertragung mit einer entfernt gelegenen Zentraleinheit. Die Zentraleinheit überträgt bei einer bevorzugten Ausführungsform bei Bedarf Nachrichten an die erfindungsgemäße Transportvorrichtung 1, wobei die Nachrichten ein Aktivierungssignal zur Aktivierung der Leseeinheit 8 enthalten können. Auf diese Weise kann bei Bedarf der Warenbestand innerhalb der Transporteinheit 2 festgestellt werden.

Nach dem Beladen der Transporteinheit 2 wertet die Auswerteeinheit 9 die empfangenen Identifizierungsdatensignale aus und sendet beispielsweise eine Inventarliste, die den aktuellen in der Transportvorrichtung 1 geladenen Warenbestand anzeigt, über die Funkschnittstelle 10 zu einer entfernt gelegenen Zentraleinheit. Wenn die Zentraleinheit während des Transportes kein weiteres Aktivierungssignal sendet wird kein weiteres Abfragesignal durch die Leseeinheit 8 in den Transportraum abgestrahlt.

Während sich die Transportvorrichtung 1 auf der Transportstrecke befindet, ist es somit Dritten nicht möglich, weitere Identifizierungsdatensignale abzuhören, so dass unbefugte Dritte nicht feststellen können, welche Waren sich in der Transportvorrichtung 1 befinden. Befindet sich die Transporteinheit 2 beispielsweise innerhalb eines Flugzeuges, kann während des Transportes in der Luft sichergestellt werden, dass keine Abfragesignale in den Transportraum des Flugzeuges ausgestrahlt werden. Hierdurch wird verhindert, dass die Identifizierungsdatensignale während des Transportes in der Luft ausgesendet werden und weitere elektronische Systeme des Flugzeugs stören. Die Auswerteeinheit 9 kann von weiteren Sensoren Aktivierungssignale erhalten. Bei der in Figur 3 dargestellten Ausführungsform ist beispielsweise zusätzlich ein Geschwindigkeitssensor vorgesehen, der zur Erfassung der Fahrgeschwindigkeit der Transportvorrichtung 1 dient. In diesem Falle wird der Auslesevorgang der Tags 4 erst ausgelöst, nachdem die Transportvorrichtung 1 einen einstellbaren Geschwindigkeitsschwellenwert überschreitet. Beispielsweise wird der Warenbestand innerhalb der Transporteinheit 2 erst ermittelt, wenn der LKW die Geschwindigkeit von 10 km/h bei seiner Abfahrt überschreitet.

Als weitere Aktivierungseinheiten werden beispielsweise zusätzlich Beladungssensoren zur Erfassung eines Beladungsgewichts der Transportvorrichtung 1 vorgesehen. Der Beladungssensor erzeugt ein Aktivierungssignal, wenn das Beladungsgewicht der Transportvorrichtung 1 einen einstellbaren Gewichtsschwellenwert überschreitet. In jedem Falle wird das Abfragesignal nach Bedarf nicht automatisch in bestimmten Zeitabständen von der Leseeinheit 8 mittels der Sende/Empfangsantenne 11 in den Transportraum der Transporteinheit 2 abgestrahlt. Die von den verschiedenen Aktivierungseinheiten erzeugten Aktivierungssignale können selbstverständlich mittels einer nicht dargestellten Logikvorrichtung innerhalb der Auswerteeinheit 9 logisch verknüpft werden. Beispielsweise wird ein Abfragesignal erst generiert, nachdem die Tür 5 fest verschlossen ist und die Anfahrtgeschwindigkeit mehr als 10 km/h beträgt. Die an den Waren 3 angebrachten Identifizierungstags 4 sind entweder aktive Tags mit einer eigenen Stromversorgung oder passive Tags, die keine eigene Stromversorgung aufweisen. Die Identifizierungstags 4 weisen vorzugsweise einen RFID Transponder auf, der vorzugsweise an einem Warenetikett angebracht ist.

Wie in Figur 3 dargestellt, ist die Auswerteeinheit 9 vorzugsweise an mindestens einem Zustandssensor 13 angeschlossen. In einer bevorzugten Ausführungsform sind in der Transporteinheit 2 Temperatursensoren zur Erfassung der Innentemperatur innerhalb der Transporteinheit 2 vorgesehen. Handelt es sich beispielsweise bei der Ware 3 um verderbliche Lebensmittel, kann mittels der Temperatursensoren 3 festgestellt werden, ob die gewünschte kühle Raumtemperatur der Transporteinheit 2 vorhanden ist. Sobald die Temperatur einen gewissen Schwellenwert überschreitet und dies durch die Auswerteeinheit 9 erfasst wird, sendet die Auswerteeinheit 9 über die Funkschnittstelle 10 ein Alarmsignal an die Zentraleinheit und gegebenenfalls ein Warnsignal an den Fahrer der Transportvorrichtung 1.

In der Transporteinheit 2 kann einen Vielzahl unterschiedlicher Zustandssensoren 13 vorgesehen werden. Darüber hinaus können bei bevorzugten Ausführungsformen der erfindungsgemäßen Transportvorrichtung 1 zusätzlich Sensoren vorgesehen sein, welche den Zustand der Transportvorrichtung 1 selbst erfassen. Wie in Figur 3 dargestellt, ist ein Zustandssensor 17 über eine Leitung 18 an die Auswerteeinheit 9 angeschlossen. Bei dem Zustandssensor 17 kann es sich beispielsweise um einen Geschwindigkeitssensor zur Erfassung der Fahrgeschwindigkeit der Transportvorrichtung 1 handeln. Alternativ kann es sich bei dem Zustandssensor 17 um einen Beschleunigungssensor zur Erfassung der Beschleunigung der Transportvorrichtung 1 handeln. Die Transportvorrichtung 1 ist eine beliebige Transportvorrichtung, beispielsweise ein Fahrzeug, ein Zug, ein Flugzeug oder ein Schiff. Der Sensor 17 ist beispielsweise ein Reifendrucksensor zur Erfassung des Reifendrucks der Reifen des Kraftfahrzeuges 1.

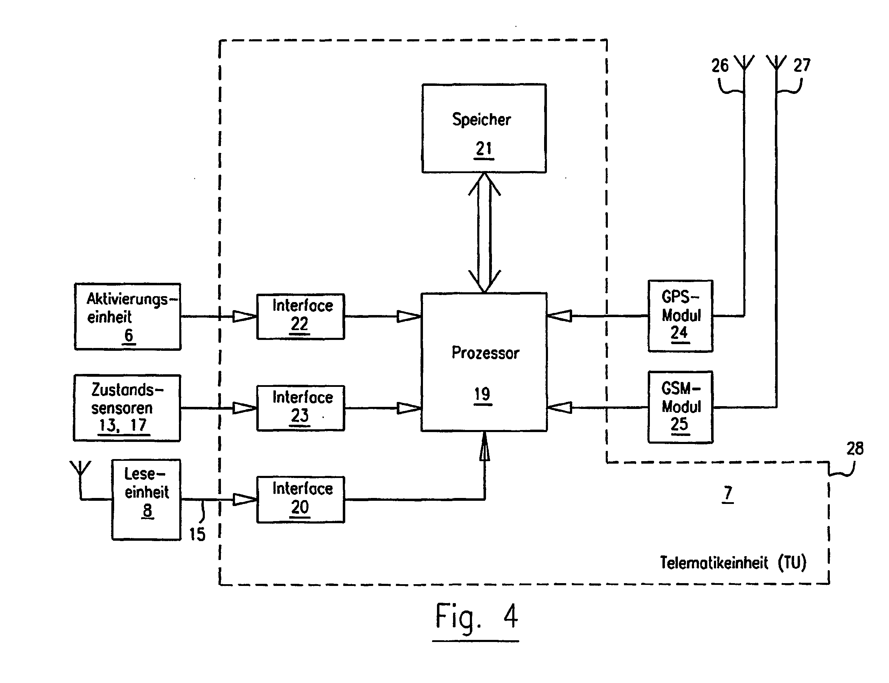

Figur 4 zeigt ein Blockschaltbild einer besonders bevorzugten Ausführungsform der Telematikeinheit 7 innerhalb der Transportvorrichtung 1. Bei der in Figur 4 dargestellten Ausführungsform enthält die Telematikeinheit 7 einen Prozessor 19 zur Datenverarbeitung der von der Leseeinheit 8 empfangenen Identifizierungsdatensignale. Die Leseeinheit 8 ist über eine Schnittstelle 20 der Telematikeinheit 7 an den Prozessor 19 angeschlossen. Die Telematikeinheit 7 weist vorzugsweise einen Speicher 21 zum Speichern von Daten auf. Die Aktivierungseinheit 6 , die beispielsweise durch einen Verschlusssensor gebildet wird, ist über eine weitere Schnittstelle 22 an den Prozessor 19 der Telematikeinheit 7 angeschlossen. Die Zustandssensoren 13, 17 sind über weitere Schnittstellen 23 der Telematikeinheit 7 an den Prozessor 19 angeschlossen. An den Prozessor 19 sind ferner ein GPS-Modul 24 und ein GSM Modul 25 angeschlossen. Das GPS-Modul 24 erhält über eine Antenne 26 Positionsdaten, die die Position der Transportvorrichtung 1 angeben. Über das GSM-Modul 25 und die daran angeschlossene Sende-/Empfangsantenne 27 tauscht der Prozessor 19 vorzugsweise .Nachrichtenpakete mit einer entfernt gelegenen Zentraleinheit aus. Das GSM-Modul 25 bildet zusammen mit der Sende-/Empfangsantenne 27 eine drahtlose Funkschnittstelle 10 wie sie in Figur 3 dargestellt ist. Die Telematikeinheit 7 wird durch eine eigene Stromversorgung bzw. Batterie, beispielsweise durch die Fahrzeugbatterie des LKW 1, mit Spannung versorgt. Die Telematikeinheit 7 ist vorzugsweise in ei-nem Gehäuse 28 integriert, welche die Telematikeinheit 7 vor Manipulationen schützt.

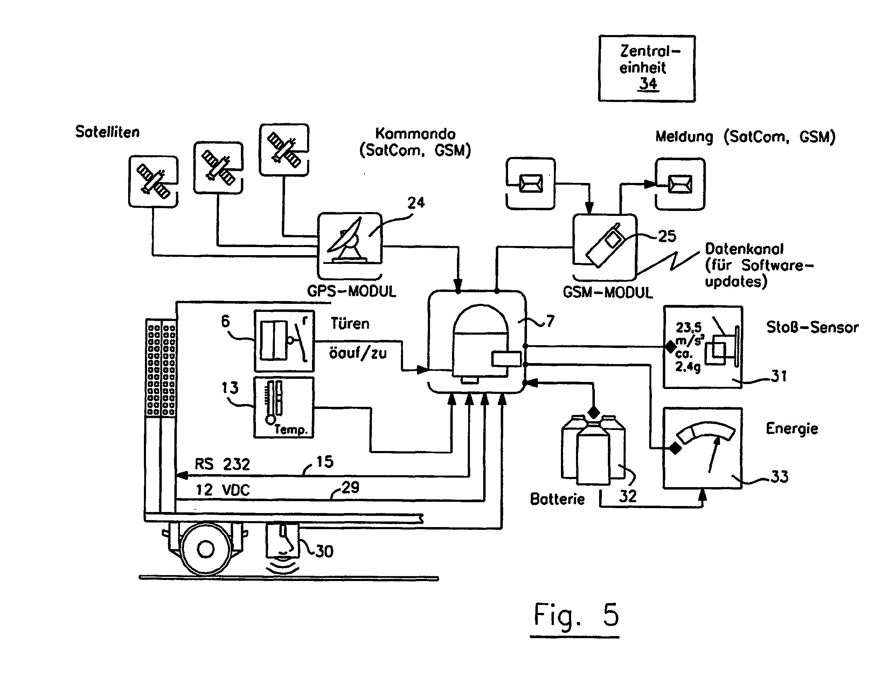

Figur 5 zeigt schematisch die Verschaltung der erfindungsgemäßen Telematikeinheit 7 innerhalb eines LKWs 1.

Von Satelliten erhält der Prozessor 19 mittels des daran angeschlossenen GPS-Moduls 24 die Positionsdaten bzw. die Koordinaten der Transportvorrichtung 1. Über das GSM-Modul 25 erhält der Prozessor 19 Nachrichten bzw. Kommandos von einer entfernt gelegenen Zentraleinheit 34. Umgekehrt kann der Prozessor 19 über das GSM-Modul 25 Meldungen bzw. Nachrichten an die entfernt gelegene Zentraleinheit 34 absenden. Ein Verschlusssensor 6 zeigt dem Prozessor 19 an, ob die Tür 5 der Transporteinheit 2 fest verschlossen ist.

Ein innerhalb der Transporteinheit 2 vorgesehener Temperatursensor 13 sendet dem Prozessor 19 Daten, welche die Temperatur innerhalb des Transportraums angeben. Über eine serielle Schnittstelle RS232 ist der Prozessor 19 an eine Leseeinheit 8 angeschlossen und erhält über eine eigenständige Stromversorgung eine Spannung von beispielsweise 12 Volt über eine Spannungsversorgungsleitung 29. Als weitere Sensoren sind beispielsweise Beladungssensoren 30 und ein Stosssensor 31 an die Telematikeinheit 7 angeschlossen. Die Telematikeinheit 7 wird ferner durch eine Batterie 32 der Transportvorrichtung 1 gespeist, wobei ein Sensor 33 den Ladezustand der Batterie 32 überwacht. Hierdurch kann frühzeitig festgestellt werden, ob der Ladezustand der Batterie 32 zur Spannungsversorgung der Telematikeinheit 7 kritisch wird. Die entsprechende Alarmmeldung kann durch die Telematikeinheit 7 an die entfernt gelegene Zentraleinheit 34 gesendet werden. Sobald ein unerwartetes Ereignis auftritt, beispielsweise das ungeplante Öffnen der Transporteinheit 2 , das Überschreiten oder Unterschreiten einer vorbestimmten Temperatur, ein kritischer Ladezustand der Batterie 32 , ein heftiger Stoss der Transportvorrichtung 1 , insbesondere in Folge eines Unfalls oder Ähnlichem, führt dazu, dass die Telematikeinheit 7 über das GSM-Modul 25 eine Alarmmeldung an die entfernt gelegene Zentraleinheit 34 absendet. Diese kann dann die entsprechenden Gegenmassnahmen veranlassen, bzw. den Fahrer der Transportvorrichtung 1 entsprechend instruieren. Die Warenempfänger am Zielort können über den verspäteten Eingang der Waren frühzeitig informiert werden. Der Datenaustausch zwischen der Telematikeinheit 7 und der entfernt gelegenen Zentraleinheit 34 kann beispielsweise über GSM, W-LAN, Bluetooth, LAN oder SAT-COM oder andere geeignete Übertragungsprotokolle erfolgen.

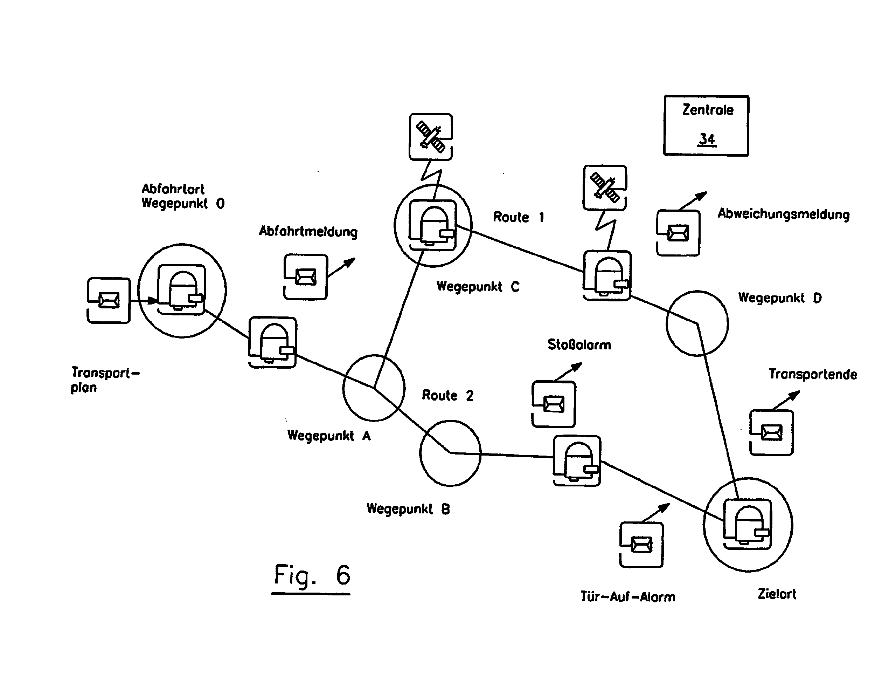

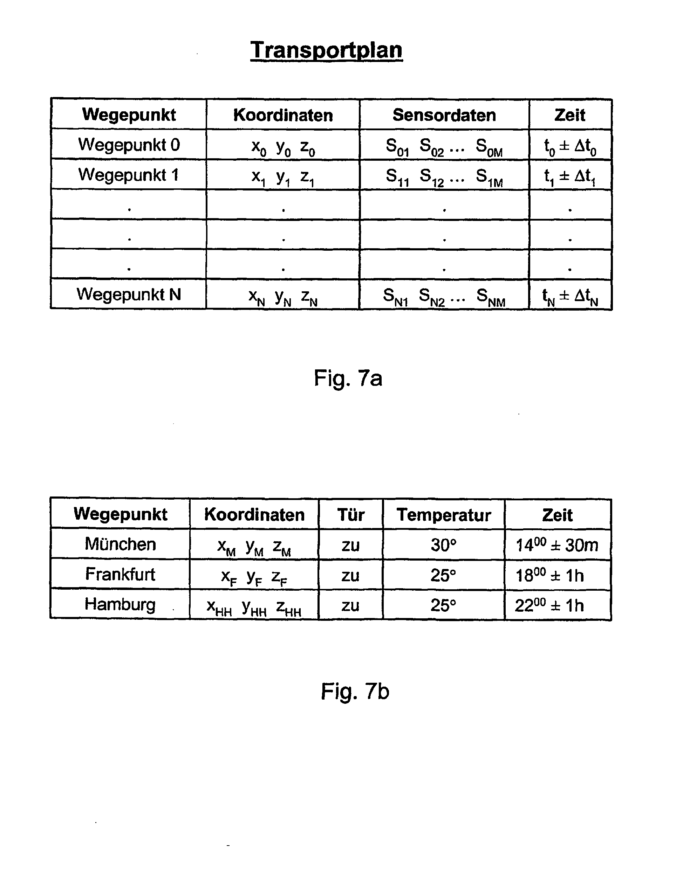

Figur 6 zeigt ein Diagramm zur Erläuterung der Funktionsweise des erfindungsgemäßen Transportüberwachungssystem. Bei dem in Figur 6 dargestellten Beispiel können Waren mittels einer Transportvorrichtung 1 von einem Abfahrtsort zu einem Zielort transportiert werden. Zunächst wird die Transportvorrichtung 1 am Abfahrtsort, der an einem vordefinierten Wegepunkt 0 eines Transportplans liegt, beladen. Die Zentrale 34 sendet über eine drahtlose Datenverbindung, beispielsweise über die GSM-Schnittstelle, den Transportplan zu der Telematikeinheit 7 der Transportvorrichtung 1. Figuren 7a, 7b zeigen Beispiele eines derartigen Transportplans.

Die Waren 3 werden in die Transporteinheit 2 der Transportvorrichtung 1 geladen, und nachdem die Transportvorrichtung 2 geschlossen ist, sendet die Leseeinheit 8 das Abfragesignal in den Transportraum. Die in die Transporteinheit 2 geladenen Waren 3 werden mittels der Identifizierungsdatensignale identifiziert , und die Telematikeinheit 7 sendet beispielsweise eine Inventarliste zu der entfernt gelegenen Zentraleinheit 34. Sobald sich die Transportvorrichtung 1 in Bewegung gesetzt hat, wird beispielsweise eine Abfahrtmeldung an die Zentrale 34 gesendet.

Wie in den Figuren 7a, 7b dargestellt erhält die Telematikeinheit 7 zu Beginn des Transportvorgangs einen festgelegten Transportplan von der Zentrale 34. Der Transportplan umfasst eine Vielzahl von definierten Wegepunkten 0, 1, 2, ..., N, beispielsweise bis zu 99 Wegepunkte (N=99). Pro Wegepunkt ist eine komplette Sensorkonfiguration in Form von Sensordaten vorgegeben. Bei jedem Wegepunkt und dessen dazugehörigen Positionskoordinaten wird zudem optional ein Zeitfenster als Toleranzbereich bestimmt. Die Transportvorrichtung 1 sollte sich an dem Wegepunkt i = 0, ... , N zu einer Zeit ti +- [Delta]ti befinden. Die Sensordaten S geben den gewünschten Zustand an dem jeweiligen Wegepunkt an.

Figur 7b zeigt ein einfaches Beispiel für einen Transportplan. Das Transportgut soll von München über Frankfurt nach Hamburg transportiert werden, wobei die Tür über die gesamte Fahrtstrecke verschlossen bleiben soll. Die Raumtemperatur innerhalb der Transporteinheit 2 soll nach dem Beladen zum Kühlen der Ware gesenkt werden und bei Frankfurt höchstens noch 25°C betragen. Der Transport ausgehend von München soll um 14 Uhr +- 30 Minuten beginnen. Die Transportvorrichtung 1 soll gemäß Transportplan Hamburg 22 Uhr +-1 Stunde erreichen. Weichen die Sensordaten an dem jeweiligen Wegepunkt von den gewünschten Sensorsolldaten ab, wird durch die erfindungsgemäße Telematikeinheit 7 ein Alarmsignal generiert und an die Zentraleinheit 34 ausgesendet. Wenn beispielsweise am Wegepunkt Frankfurt festgestellt wird, dass die Temperatur mehr als 25°C innerhalb der Transporteinheit 2 beträgt, wird ein entsprechendes Alarmsignal an die Zentrale gesendet. Wird die Tür ungewollt während des Transports geöffnet, wird ebenfalls ein Warnsignal an die Zentrale abgegeben. An jedem Wegepunkt wird durch die Telematikeinheit 7 ein Zeitstempel generiert, und es wird ein Warnsignal an die Zentrale gesendet, wenn die Zeitstempel sich nicht innerhalb des Zeit-Toleranzbereichs befinden. Selbstverständlich können bei einer bevorzugten Ausführungsform den verschiedenen Nachrichten Prioritäten zugeordnet werden. Beispielsweise kann das Öffnen der Tür zu einem Alarmsignal mit hoher Priorität führen, während ein geringfügiges Überschreiten des Temperaturschwellenwertes zu einer Nachricht mit einer geringen Priorität führt. Bei dem in Figur 6 dargestellten Beispiel bewegt sich die Transportvorrichtung 1 zunächst zum Wegepunkt A des Transportplans hin. Es sind sogenannte Watchboxen durch einen geografischen Punkt mit einem Radius definiert. Der Eintritt bzw. der Austritt aus einem derartigen geografischen Bereich wird der Zentrale 34 durch eine entsprechende Nachricht signalisiert. Dabei besteht eine Planzeitüberwachung, die überwacht, ob die entsprechenden Watchboxen bzw. Bereiche zu bestimmten vorgegebenen Zeitpunkten durch die Transportvorrichtung 1 erreicht werden.

Bei dem in Figur 6 dargestellten Beispiel sieht der gegebene Transportplan vor, dass das Fahrzeug ausgehend vom Wegepunkt A sich über die Route 2 hin zu dem Wegepunkt B bewegt. Fährt das Fahrzeug irrtümlich eine andere Route, beispielsweise über den Wegepunkt C und den Wegepunkt D, sendet die Telematikeinheit 7 eine Abweichungsmeldung zu der Zentrale 34. Während des Transportvorgangs kann die Transportvorrichtung 1 aufgrund der mit den Zustandssensoren gewonnenen Daten verschiedene Alarmnachrichten zu der Zentrale 34 senden. In dem in Figur 6 dargestellten Beispiel sendet die Transportvorrichtung 1 einen Stossalarm, welcher einen heftigen Stoss auf die Transporteinheit 2 meldet, zu der Zentrale 34. Kurz vor dem Zielort sendet die Telematikeinheit 7 bei dem dargestellten Beispiel ferner einen Tür-Auf-Alarm an die Zentrale 34 , welche anzeigt, dass die Transporteinheit 2 ataweichend von dem Transportplan geöffnet wurde.

Nachdem die Transportvorrichtung 1 den Zielort, d. h. den letzten Wegepunkt des Transportplans erreicht hat, wird eine Transportendemeldung an die Zentrale 34 abgesendet.

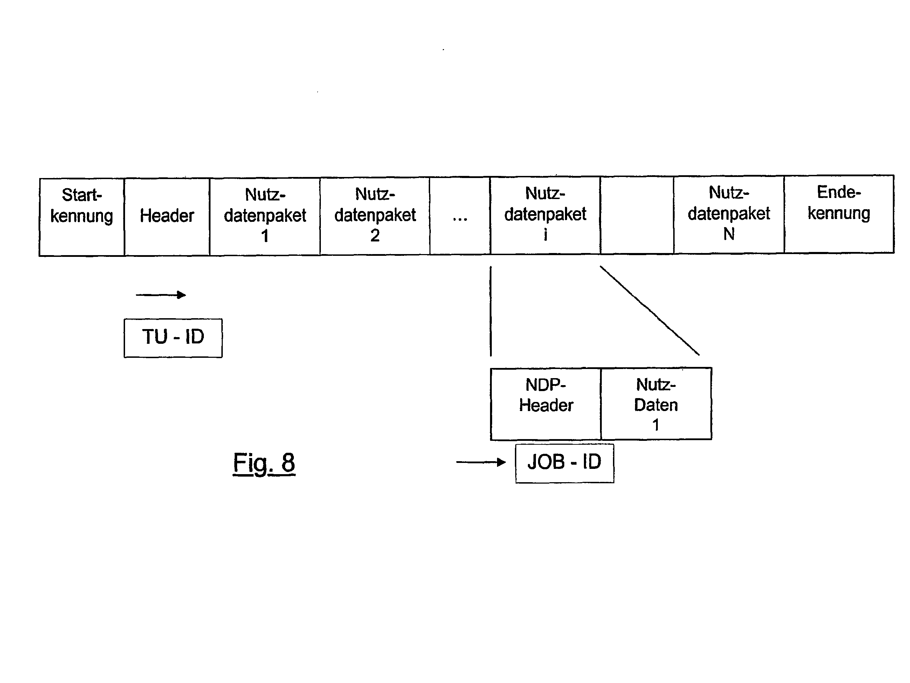

Figur 8 zeigt eine mögliche Datenstruktur, der zwischen der Zentrale 34 und der Transportvorrichtung 1 ausgetauschten Nachrichten. Die Nachricht bzw. Message umfasst eine Start- und eine Enderkennung. Die Message enthält ferner Header bzw. Kopfdaten. Diese Kopfdaten umfassen eine eindeutige Kennung der sendenden Telematikeinheit 7 (TU-ID) und beispielsweise ein Datenfeld, das die Anzahl N der in dem Datenrahmen übertragenen Nutzdatenpakete angibt. Beispielsweise kann jedes Nutzdatenpaket einen Wegepunkt des Transportplans umfassen. Beispielsweise kann die Transportvorrichtung 1 an jedem Wegepunkt ein entsprechendes Nutzdatenpaket 1 an die Zentrale 34 absenden, welches die aktuellen Sensordaten die Koordinaten sowie Zeitdaten umfasst.

Der Vergleich entsprechender Daten mit dem vorgegeben Solltransportplan erfolgt bei dieser Ausführungsform innerhalb der Zentrale 34. Bei einer bevorzugten Ausführungsform erfolgt der Vergleich zwischen den Soll- und den aktuellen Istdaten innerhalb der Telematikeinheit 7 und erst bei einer festgestellten Abweichung wird ein Alarmsignal bzw. eine Alarmnachricht an die Zentrale 34 gesendet. Hierdurch wird der Datenumfang der an die Zentrale 34 von den verschiedenen Transportvorrichtungen 1 abgesendeten Daten erheblich reduziert. Erst bei Auftreten von Abweichungen erhält die Zentrale 34 entsprechende Nachrichten von den verschiedenen Transportvorrichtungen 1.

Jedes Nutzdatenpaket umfasst seinerseits einen Header mit entsprechenden Nutzdaten bzw. Pay-Load. Der Nutzdatenpaketheader umfasst eine eindeutige Kennung von welchem Job, bzw. von welchem Prozess auf dem Endgerät, die entsprechende Nachricht erzeugt wird. Bei einer einzigen Meldung können Nutzdaten verschiedener Prozesse eingebettet sein, jedoch wird eine Optimierung der Datenübertragung durch Auffüllen eines Datenrahmens mit Daten unterschiedlicher Abfragen erzielt. Die Nutzdatenpakete können dabei in beliebiger Reihenfolge in der Meldung bzw. dem Rahmen angeordnet sein. In einer bevorzugten Ausführungsform senden neu implementierte Zustandssensoren entsprechende Nutzdatenpakete für ihre Anmeldung an die Zentrale 34, ohne den bestehenden Mechanismus zu ändern. Hierdurch wird eine universelle Erweiterbarkeit gewährleistet. Der Datenübertragungsrahmen, wie er in Figur 8 dargestellt ist, kann mittels bestimmter Routinen zerlegt und wieder zusammengebaut werden, so dass der Versand über SMS oder GPRS erleichtert wird.

Die in den Nutzdatenpaketen übertragenen Nutzdaten können Positionsdaten, Zustandssensordaten, Zeitdaten aber auch Inventarlisten der in der Transportvorrichtung 1 transportierten Waren umfassen. Die Nachrichten werden zwischen der Zentrale 34 und den Transportvorrichtungen 1 über ein vorgegebenes Datenübertragungsprotokoll beispielsweise ein TDCP Datenübertragungsprotokoll übertragen. Vorzugsweise erfolgt die Datenübertragung zwischen der Zentrale 34 und den Transportvorrichtungen 1 wie in Figur 8 dargestellt, paketweise. Die Zentrale 34 kann bei einer bevorzugten Ausführungsform auch Befehlsnachrichten zur Aktivierung von Aktoren innerhalb der Transportvorrichtung 1 aussenden. Beispielsweise kann die Zentrale 34 einen Befehl zur Verriegelung der Transporteinheit 2 an die Transportvorrichtung 1 senden. Dabei aktiviert die Telematikeinheit 7 nach Empfang eines entsprechenden Befehls die Verriegelungsvorrichtung und schliesst die Tür 5 an der Transporteinheit 2. Hierdurch ist eine Fernverriegelung, beispielsweise eines Containers, durch die Zentraleinheit 34 möglich.

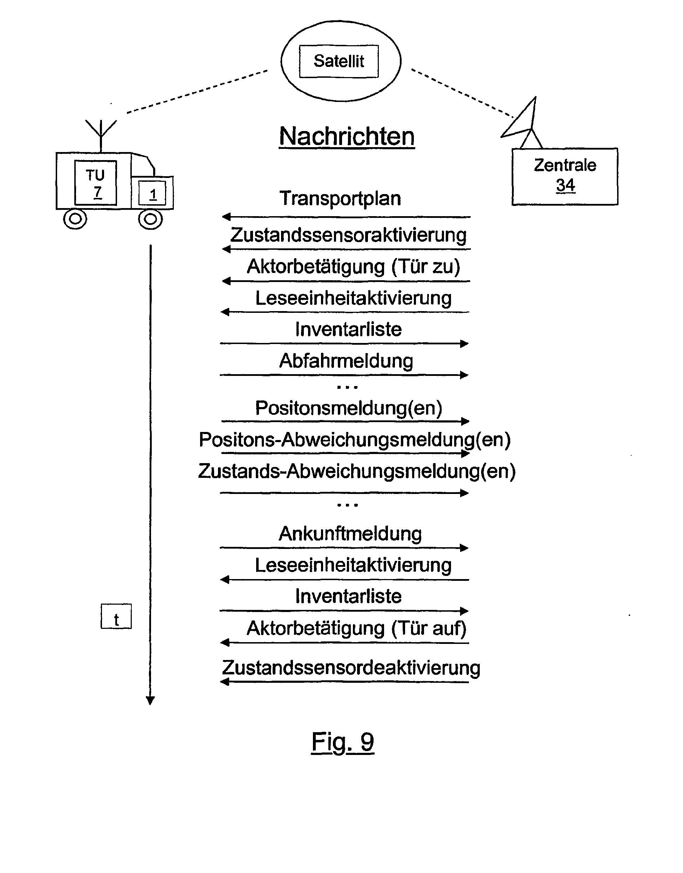

Durch den Vergleich der Ist- mit den Solldaten ist es der Zentrale jederzeit möglich, einen vollständigen Überblick über den Transportzustand der transportierten Waren zu erhalten. Die Empfänger der entsprechenden Waren können dabei fortlaufend über den Transportvorgang informiert werden. Eine Abweichung vom Transportplan stellt ein sogenanntes Event (Ereignis) dar, das zur Generierung einer Abweichungsmeldung führt, die an die Zentrale 34 gesendet wird. Die Zentrale 34 kann dem Fahrer Nachrichten mit Lösungsvorschlägen übermitteln. Die Zentrale 34 greift vorzugsweise nur bei festgestellten Abweichungen von dem Transportplan ein (Management by exception). Die eventgesteuerte Alarmierung erfolgt nach allen sicherheitskritischen Ereignissen, wobei Abweichungen im geplanten Transportverlauf in Echtzeit bzw. zeitnah gemeldet werden. Die Inhalte aller Transporteinheiten 2 werden automatisch inventarisiert. Die Datenübertragung zwischen den Transportvorrichtungen 1 und der Zentrale 34, erfolgt vorzugsweise mittels verschlüsselter Datenübertragung. Figur 9 zeigt den Austausch zwischen einer Telematikeinheit 7 und einer Zentrale 34 über eine drahtlose Funkverbindung, beispielsweise über Satellit. Zunächst sendet die Zentrale 34 den vordefinierten Transportplan an die Telematikeinheit 7. Anschließend werden die Zustandssensoren der Transportvorrichtung 1 aktiviert. Bei dem in Figur 9 dargestellten Beispiel erfolgt eine Fernverriegelung der Transporteinheit 2 durch Schließen eines Aktors, nachdem die Zentrale 34 eine entsprechende Nachricht an die Transportvorrichtung 1 gesendet hat. Ein Verschlusssensor 6 meldet der Auswerteeinheit 9 , dass die Transporteinheit 2 verschlossen ist, und ein zusätzliches von der Zentrale 34 gesendetes Leseeinheitsaktivierungssignal wird mit dem Aktivierungssignal des Verschlusssensors 6 logisch UND-verknüpft und anschließend wird die Leseeinheit 8 zum Aussenden des Abfragesignals in den Transportraum aktiviert. Erst wenn das von dem Verschlusssensor 6 abgegebene Aktivierungssignal logisch hoch ist und das von der Zentrale 34 gesendete Aktivierungssignal ebenfalls logisch hoch ist, wird die Leseeinheit 8 zum Aussenden des Abfragesignals aktiviert. Die von den Tags 4 zurückgesendeten Identifizierungsdatensignale werden durch die Auswerteeinheit 9 ausgewertet und zu einer Inventarliste zusammengestellt. Die Inventarliste wird von der Telematikeinheit 7 an die Zentrale 34 gesendet. Nachdem beispielsweise ein Sensor das Überschreiten einer bestimmten Fahrgeschwindigkeit meldet, sendet die Transportvorrichtung 1 eine Abfahrtmeldung an die Zentrale 34.

Während des Transports werden an den Wegpunkten oder auf Anfrage hin Positionsmeldungen an die Zentrale 34 gesendet. Erkennt die Telematikeinheit 7 eine Positionsabweichung von dem vorgegebenen Transportplan wird eine Positionsabweichungsmeldung an die Zentrale 34 gesendet. Wird mittels der erfassten Sensordaten eine Zustandsabweichung durch die Auswerteeinheit 9 erfasst, werden ebenfalls Zustandsabweichungsmeldungen an die Zentrale 34 gesendet.

Sobald die Transportvorrichtung 1 den Zielort erreicht hat, sendet sie eine Ankunftsmeldung an die Zentrale 34. Diese sendet beispielsweise ein Aktivierungssignal zur Aktivierung der Leseeinheit 8, und die ausgelesenen und verarbeiteten Identifizierungsdatensignale werden von der Transportvorrichtung 1 als Inventarliste an die Zentrale 34 zurückgesendet. Die vom Abfahrtsort abgesendete Inventarliste und die am Zielort abgesendeten Inventarlisten werden von der Zentrale 34 miteinander verglichen. Wird festgestellt, dass die beiden Inventarlisten identisch sind, wird erkannt, dass während des Transportvorgangs keine Waren verloren gegangen sind. Wenn umgekehrt festgestellt wird, dass die Inventarliste am Zielort von der Inventarliste am Abfahrtsort abweicht, wird dies durch die Zentrale 34 erkannt und beispielsweise dem Fahrer gemeldet. Nach Erhalt der Inventarliste am Zielort sendet die Zentrale 34 beispielsweise eine Nachricht zur Betätigung eines Aktors in der Transportvorrichtung 1. Beispielsweise wird die Verriegelung der Tür der Transporteinheit 2 geöffnet. Anschließend können beispielsweise die Zustandssensoren durch die Zentrale 34 deaktiviert werden, um Energie zu sparen.

Das erfindungsgemäße Transportüberwachungssystem überwacht den Transportzustand mittels berührungsloser Sensortechnologie voll automatisch. Ein eigener Mechanismus meldet Abweichungen von dem Transportplan, wobei Abweichungen vom Transportplan vordefinierte Aktionen auslösen können. Das erfindungsgemäße Transportüberwachungssystem ist für das jeweilige Einsatzgebiet flexibel konfigurierbar. Da Abfragesignale und entsprechende Identifizierungsdatensignale während des Transportvorgangs nur in Reaktion auf ein Aktivierungssignal erzeugt werden, ist das erfindungsgemäße Transportüberwachungssystem abhörsicher und erlaubt auch den Einsatz von aktiven Tags 4. In einer bevorzugten Ausführungsform wird das gewaltsame Öffnen der fest verschlossenen Transporteinheit 2 über weitere Zustandssensoren gemeldet. Das erfindungsgemäße Transportüberwachungssystem eignet sich insbesondere auch für den Transport von Waren in Flugzeugen, da keine Störsignale die Flugsicherheit beeinträchtigen. Bei den Waren handelt es sich um beliebige Gegenstände, insbesondere auch um Tiere, die mit Tags versehen sind. Das erfindungsgemäße Transportüberwachungssystem eignet sich somit beispielsweise zur Viehtransportverfolgung.

## Patentansprüche

1. Transportüberwachungssystem zum abhörsicheren Transport von Waren (3), die mit Identifizierungstags (4)versehen sind, welche Identifizierungsdaten zum Identifizieren der Waren (3) speichern,
wobei das Transportüberwachungssystem aufweist:
(a) eine verschließbare Transporteinheit (2) zur Aufnahme der mit den Identifizierungstags (4) versehenen Waren (3);
(b) mindestens eine Aktivierungseinheit (6, 30) zur Erzeugung eines Aktivierungssignals beim Schließen der Transporteinheit (2)
**gekennzeichnet durch**
(c) eine Funkschnittstelle (10) zum Empfang von Nachrichten von einer Zentraleinheit (34), die ein weiteres Aktivierungssignal enthalten;
(d) eine Auswerteeinheit (9) mit einer Logikvorrichtung, welche die Aktivierungssignale zur Aktivierung einer Leseeinheit (8) logisch UND verknüpft;
(e) wobei die Leseeinheit (8) derart eingerichtet ist, dass sie nach einer Aktivierung ein einmaliges Abfragesignal zum Auslesen der Identifizierungstags (4) in die Transporteinheit (2) abstrahlt und die von den Identifizierungstags (4) daraufhin abgegebenen Identifizierungsdatensignale empfängt, wobei die Leseeinheit (8), sofern sie nicht ein anderes Aktivierungsignal erhält, kein weiteres Abfragesignal zum Auslesen der Identifizierungstags (4) in die Transporteinheit (2) abstrahlt, so dass es unbefugten Dritten nicht möglich ist, Identifizierungsdatensignale zur Feststellung, welche Waren sich in der Transporteinheit (2) befinden, abzuhören; und
(f) wobei die Auswerteeinheit (9) die von der Leseeinheit (8) empfangenen Identifizierungsdatensignale auswertet.

2. Transportüberwachungssystem nach Anspruch 1, **dadurch** gekenn-zeichnet, dass die Leseeinheit(8) eine Sende/Empfangsantenne (11) zum Abstrahlen des Abfragesignals in die Transporteinheit (2) und zum Empfang der Identifizierungsdatensignale von den Identifizierungstags (4) aufweist.

3. Transportüberwachungssystem nach Anspruch 1, **dadurch gekennzeichnet, dass** die Auswerteeinheit (9) mindestens eine Schnittstelle (10) zur drahtlosen Datenübertragung aufweist.

4. Transportüberwachungssystem nach Anspruch 1, **dadurch gekennzeichnet, dass** ein Geschwindigkeitssensor zur Erfassung einer Fahrgeschwindigkeit des Transportüberwachungssystem als eine erste Aktivierungseinheit vorgesehen ist, die ein Aktivierungssignal erzeugt, wenn die Fahrgeschwindigkeit einen einstellbaren Geschwindigkeitsschwellenwert überschreitet.

5. Transportüberwachungssystem nach Anspruch 1, **dadurch gekennzeichnet, dass** ein Beladungssensor (30) zur Erfassung eines Beladungsgewichtes des Transportüberwachungssystem als eine zweite Aktivierungseinheit vorgesehen ist, die ein Aktivierungssignal erzeugt, wenn das Beladungsgewicht einen einstellbaren Gewichtsschwellenwert überschreitet.

6. Transportüberwachungssystem nach Anspruch 1, **dadurch gekennzeichnet, dass** die Transporteinheit (2) ein Container ist.

7. Transportüberwachungssystem nach Anspruch 1, **dadurch gekennzeichnet, dass** die Identifizierungstags (4) aktive Tags mit einer eigenen Stromversorgung sind.

8. Transportüberwachungssystem nach Anspruch 1, **dadurch gekennzeichnet, dass** die Identifizierungstags (4) passive Tags ohne eine eigene Stromversorgung sind.

9. Transportüberwachungssystem nach Anspruch 1, **dadurch gekennzeichnet, dass** die Identifizierungstags (4) jeweils RFID-Transponder enthalten.

10. Transportüberwachungssystem nach Anspruch 9, **dadurch gekennzeichnet, dass** an den RFID-Transpondern jeweils ein Warenetikett angebracht ist.

11. Transportüberwachungssystem nach Anspruch 1, **dadurch gekennzeichnet, dass** Zustandssensoren (13) zur Erfassung des Transportzustandes der Waren (3) an die Auswerteeinheit (9) angeschlossen sind.

12. Transportüberwachungssystem nach Anspruch 11, **dadurch gekennzeichnet, dass** die Zustandssensoren (13) Temperatursensoren zur Erfassung der Temperatur innerhalb der Transporteinheit (2) umfassen.

13. Transportüberwachungssystem nach Anspruch 11, **dadurch gekennzeichnet, dass** die Zustandssensoren (13) Geschwindigkeitssensoren zur Erfassung einer Fahrgeschwindigkeit des Transportüberwachungssystem umfassen.

14. Transportüberwachungssystem nach Anspruch 11, **dadurch gekennzeichnet, dass** die Zustandssensoren (13) Beschleunigungssensoren zur Erfassung der Beschleunigung des Transportüberwachungssystem umfassen.

15. Transportüberwachungssystem nach Anspruch 1, **dadurch gekennzeichnet, dass** das Transportüberwachungssystem ein Kraftfahrzeug ist.

16. Transportüberwachungssystem nach Anspruch 15, **dadurch gekennzeichnet, dass** das Kraftfahrzeug Zustandssensoren (17) zur Erfassung des Transportzustandes der Waren (3) aufweist, die an die Auswerteeinheit (9) angeschlossen sind.

17. Transportüberwachungssystem nach Anspruch 16, **dadurch gekennzeichnet, dass** die Zustandssensoren (17) Reifendrucksensoren zur Erfassung des Reifendruckes von Reifen des Kraftfahrzeuges umfassen.

18. Transportüberwachungssystem nach Anspruch 1, **dadurch gekennzeichnet, dass** die Auswerteeinheit (9)
eine Schnittstelle zu der Leseeinheit (8) und
einen Prozessor (19) zur Datenverarbeitung der von der Leseeinheit (8) empfangenen Identifizierungsdatensignale aufweist.

19. Transportüberwachungssystem nach Anspruch 18, **dadurch gekennzeichnet, dass** die Auswerteeinheit (9) ferner eine Schnittstelle zum Anschluss von Zustandssensoren (13,17) und
eine Schnittstelle zum Anschluss mindestens einer Aktivierungseinheit (6) aufweist.

20. Transportüberwachungssystem nach Anspruch 1, **dadurch gekennzeichnet, dass** die Auswerteeinheit (9) ferner eine GSM-Einheit (25) zum Austausch von Nachrichten mit einer Zentraleinheit (34) aufweist.

21. Transportüberwachungssystem nach Anspruch 1, **dadurch gekennzeichnet, dass** die Auswerteeinheit eine GPS (= global positioning system) -Einheit (24), zur Erfassung der Position des Transportüberwachungssystem aufweist.

## Claims

1. Transport monitoring system for the wiretapping-proof transportation of goods (3) provided with identification tags (4) storing identification data for identifying the goods (3),
the transport monitoring system having:
(a) a closable transport unit (2) for receiving the goods (3) provided with the identification tags (4);
(b) at least one activation unit (6, 30) for generating an activation signal when closing the transport unit (2),
**characterized by**
(c) a radio interface (10) for receiving messages containing a further activation signal from a central unit (34);
(d) an evaluation unit (9) with a logic device which logically AND-links the activation signals for activating a reading unit (8);
(e) the reading unit (8) being configured in such a way that it emits after an activation a unique interrogation signal to read out the identification tags (4) into the transport unit (2) and receives the identification data signals subsequently issued by the identification tags (4), the reading unit (8) emitting, provided that it does not receive a different activation signal, no further interrogation signal to read out the identification tags (4) into the transport unit (2), so that it is not possible for unauthorised third parties to wiretap identification data signals in order to ascertain which goods are located in the transport unit (2); and
(f) the evaluation unit (9) evaluating the identification data signals received from the reading unit (8).

2. Transport monitoring system according to claim 1, **characterized in that** the reading unit (8) has a transmit/receive antenna (11) for emitting the interrogation signal into the transport unit (2) and for receiving the identification data signals from the identification tags (4).

3. Transport monitoring system according to claim 1, **characterized in that** the evaluation unit (9) has at least one interface (10) for wireless data transmission.

4. Transport monitoring system according to claim 1, **characterized in that** a speed sensor for detecting a speed of travel of the transport monitoring system is provided as a first activation unit which generates an activation signal if the speed of travel exceeds a settable speed threshold value.

5. Transport monitoring system according to claim 1, **characterized in that** a load sensor (30) for detecting a load weight of the transport monitoring system is provided as a second activation unit which generates an activation signal if the load weight exceeds a settable weight threshold value.

6. Transport monitoring system according to claim 1, **characterized in that** the transport unit (2) is a container.

7. Transport monitoring system according to claim 1, **characterized in that** the identification tags (4) are active tags with their own power supply.

8. Transport monitoring system according to claim 1, **characterized in that** the identification tags (4) are passive tags without their own power supply.

9. Transport monitoring system according to claim 1, **characterized in that** the identification tags (4) each contain RFID transponders.

10. Transport monitoring system according to claim 9, **characterized in that** a goods label is attached to each of the RFID transponders.

11. Transport monitoring system according to claim 1, **characterized in that** state sensors (13) for detecting the state of transportation of the goods (3) are connected to the evaluation unit (9).

12. Transport monitoring system according to claim 11, **characterized in that** the state sensors (13) comprise temperature sensors for detecting the temperature within the transport unit (2).

13. Transport monitoring system according to claim 11, **characterized in that** the state sensors (13) comprise speed sensors for detecting a speed of travel of the transport monitoring system.

14. Transport monitoring system according to claim 11, **characterized in that** the state sensors (13) comprise acceleration sensors for detecting the acceleration of the transport monitoring system.

15. Transport monitoring system according to claim 1, **characterized in that** the transport monitoring system is a motor vehicle.

16. Transport monitoring system according to claim 15, **characterized in that** the motor vehicle has state sensors (17) for detecting the state of transportation of the goods (3), the state sensors being connected to the evaluation unit (9).

17. Transport monitoring system according to claim 16, **characterized in that** the state sensors (17) comprise tyre pressure sensors for detecting the tyre pressure of tyres of the motor vehicle.

18. Transport monitoring system according to claim 1, **characterized in that** the evaluation unit (9) has
an interface to the reading unit (8) and
a processor (19) for data processing the identification data signals received from the reading unit (8).

19. Transport monitoring system according to claim 18, **characterized in that** the evaluation unit (9) also has
an interface for connecting state sensors (13, 17) and
an interface for connecting at least one activation unit (6).

20. Transport monitoring system according to claim 1, **characterized in that** the evaluation unit (9) also has a GSM unit (25) for exchanging messages with a central unit (34).

21. Transport monitoring system according to claim 1, **characterized in that** the evaluation unit has a GPS (= global positioning system) unit (24) for detecting the position of the transport device (1).

## Revendications

1. Système de surveillance de transport destiné au transport protégé contre les interceptions de marchandises (3) munies de tags d'identification (4) qui mémorisent des données d'identification des marchandises (3),
le système de surveillance de transport comprenant:
(a) une unité de transport (2) fermable destinée à recevoir les marchandises (3) munies des tags d'identification (4) ;
(b) au moins une unité d'activation (6, 30) pour générer un signal d'activation au moment de la fermeture de l'unité de transport (2),
**caractérisé par**
(c) une interface radio (10) destinée à recevoir, d'une unité centrale (34), des informations comprenant un autre signal d'activation ;
(d) une unité d'évaluation (9) comprenant un dispositif logique qui combine les signaux d'activation par une opération logique ET pour activer une unité de lecture (8) ;
(e) l'unité de lecture (8) étant agencée de manière à émettre, après une activation, un signal d'interrogation unique vers l'unité de transport (2) pour la lecture des tags d'identification (4), et à recevoir les signaux de données d'identification ensuite envoyés par les tags d'identification (4), l'unité de lecture (8) n'émettant pas d'autre signal d'interrogation pour la lecture des tags d'identification (4) vers l'unité de transport (2), à moins qu'elle ne reçoive un autre signal d'activation, de manière à interdire à des tiers non autorisés la possibilité d'intercepter des signaux de données d'identification permettant de connaître la nature des marchandises contenues dans l'unité de transport (2) ; et
(f) l'unité d'évaluation (9) analysant les signaux de données d'identification reçus de l'unité de lecture (8).

2. Système de surveillance de transport selon la revendication 1, **caractérisé en ce que** l'unité de lecture (8) comporte une antenne émettrice/réceptrice (11) pour émettre le signal d'interrogation vers l'unité de transport (2) et pour recevoir les signaux de données d'identification des tags d'identification (4).

3. Système de surveillance de transport selon la revendication 1, **caractérisé en ce que** l'unité d'évaluation (9) comporte au moins une interface (10) pour la transmission de données sans fil.

4. Système de surveillance de transport selon la revendication 1, **caractérisé en ce qu'**un capteur de vitesse destiné à la détection d'une vitesse du système de surveillance de transport est prévu comme première unité d'activation qui génère un signal d'activation lorsque la vitesse dépasse une valeur seuil de vitesse paramétrable.

5. Système de surveillance de transport selon la revendication 1, **caractérisé en ce qu'**un capteur de charge (30) destiné à la détection d'un poids de charge du système de surveillance de transport est prévu comme deuxième unité d'activation qui génère un signal d'activation lorsque le poids de charge dépasse une valeur seuil de poids paramétrable.

6. Système de surveillance de transport selon la revendication 1, **caractérisé en ce que** l'unité de transport (2) est un conteneur.

7. Système de surveillance de transport selon la revendication 1, **caractérisé en ce que** les tags d'identification (4) sont des tags actifs ayant leur alimentation électrique propre.

8. Système de surveillance de transport selon la revendication 1, **caractérisé en ce que** les tags d'identification (4) sont des tags passifs n'ayant pas d'alimentation électrique propre.

9. Système de surveillance de transport selon la revendication 1, **caractérisé en ce que** les tags d'identification (4) contiennent chacun un transpondeur RFID.

10. Système de surveillance de transport selon la revendication 9, **caractérisé en ce qu'**une étiquette de marchandise est apposée sur chacun des transpondeurs RFID.

11. Système de surveillance de transport selon la revendication 1, **caractérisé en ce que** des capteurs d'état (13) pour détecter l'état de transport des marchandises (3) sont raccordés à l'unité d'évaluation (9).

12. Système de surveillance de transport selon la revendication 11, **caractérisé en ce que** les capteurs d'état (13) comprennent des capteurs de température pour détecter la température à l'intérieur de l'unité de transport (2).

13. Système de surveillance de transport selon la revendication 11, **caractérisé en ce que** les capteurs d'état (13) comprennent des capteurs de vitesse pour détecter une vitesse du système de surveillance de transport.

14. Système de surveillance de transport selon la revendication 11, **caractérisé en ce que** les capteurs d'état (13) comprennent des capteurs d'accélération pour détecter l'accélération du système de surveillance de transport.

15. Système de surveillance de transport selon la revendication 1, **caractérisé en ce que** le système de surveillance de transport est un véhicule automobile.

16. Système de surveillance de transport selon la revendication 15, **caractérisé en ce que** le véhicule automobile comporte des capteurs d'état (17) qui sont raccordés à l'unité d'évaluation (9) pour détecter l'état de transport des marchandises (3).

17. Système de surveillance de transport selon la revendication 16, **caractérisé en ce que** les capteurs d'état (17) comprennent des capteurs de pression de pneumatiques pour détecter la pression des pneumatiques du véhicule automobile.

18. Système de surveillance de transport selon la revendication 1, **caractérisé en ce que** l'unité d'évaluation (9) comporte
une interface vers l'unité de lecture (8) et
un processeur (19) de traitement de données des signaux de données d'identification reçus de l'unité de lecture (8).

19. Système de surveillance de transport selon la revendication 18, **caractérisé en ce que** l'unité d'évaluation (9) comprend en plus
une interface pour le raccordement de capteurs d'état (13, 17) et
une interface pour le raccordement d'au moins une unité d'activation (6).

20. Système de surveillance de transport selon la revendication 1, **caractérisé en ce que** l'unité d'évaluation (9) comporte en plus une unité GSM (25) pour échanger des informations avec une unité centrale (34).

21. Système de surveillance de transport selon la revendication 1, **caractérisé en ce que** l'unité d'évaluation comporte une unité GPS (= global positioning System) (24) pour détecter la position du dispositif de transport.
